Europäisches Patentamt

(19) European Patent Office

Office européen des brevets

(11) Veröffentlichungsnummer: **0 058 376**
**B1**

(12) **EUROPÄISCHE PATENTSCHRIFT**

(45) Veröffentlichungstag der Patentschrift:
31.07.85

(21) Anmeldenummer: 82100929.7

(22) Anmeldetag: 09.02.82

(51) Int. Cl.⁴: **E 04 C 2/40,** E 04 B 2/72,
B 62 D 33/04

(54) Verbindung für ineinandergreifende Metall- oder Kunststoffprofile.

(30) Priorität: 13.02.81 AT 672/81

(43) Veröffentlichungstag der Anmeldung:
25.08.82 Patentblatt 82/34

(45) Bekanntmachung des Hinweises auf die Patenterteilung:
31.07.85 Patentblatt 85/31

(84) Benannte Vertragsstaaten:
BE CH DE FR LI NL SE

(56) Entgegenhaltungen:
FR - A - 1 604 522
FR - A - 2 109 673
US - A - 2 256 791
US - A - 2 256 791

(73) Patentinhaber: Vereinigte Metallwerke
Ranshofen-Berndorf AG, A-5282 Braunau am Inn (AT)

(72) Erfinder: Falk, Friedrich, Mozartstrasse 56,
A-5280 Braunau am Inn (AT)

(74) Vertreter: Hain, Leonhard, Dipl.-Ing., Tal 18/IV,
D-8000 München 2 (DE)

BUNDESDRUCKEREI BERLIN

## Beschreibung

Die Erfindung betrifft eine Randverbindung für aneinanderstoßende Strangpreßprofile aus Metall oder Kunststoff zur Bildung einer Wandkonstruktion gemäß dem Oberbegriff des Patentanspruches 1.

Bei Kastenwagenaufbauten, Containern usw. ist es bekannt, die Seitenwände aus zusammenschnappbaren Profilen zusammenzubauen. Diese Profilverbindungen sind zwar quer, jedoch nicht längs zur Profilrichtung gegen Verschieben gesichert. Falls dies notwendig ist, müssen die Profile untereinander verschweißt, verschraubt oder vernietet werden. Aus diesen Gründen lassen sich selbsttragende Kofferaufbauten bzw. Container nur unter großem Aufwand herstellen. Auch bei einer bekannten Randverbindung für aneinanderstoßende Strangpreßprofile (FR-A-2 109 673) zur Bildung eines zweischaligen Plattenelementes sind an den Stoßkanten jeweils zwei ineinandergreifende Längsrippen vorgesehen, die entweder wulstartig oder unter Verhakung sich übergreifen und dadurch das Plattenelement gegen Querzug sichern. Da sich aber diese Längsprofilierung durchgehend gleichmäßig auf die ganze Länge der Längsrippen erstreckt, sind auch diese Strangpreßprofile in Profillängsrichtung gegeneinander verschiebbar. Dies vermeidet zwar eine andere bekannte Randverbindung (US-A-2 256 791) dadurch, daß an den Stoßkanten Winkelabschnitte, die zahnartig ineinandergreifen, vorgesehen sind. Diese Verbindung bietet aber keine Sicherung gegen Querzug, außer es wird dazu ein eigens zu diesem Zweck vorgesehenes Steckrohr zwischen die Winkelabschnitte eingeschoben, wodurch diese Konstruktion durch ein zusätzliches drittes Element in der Herstellung aufwendiger und vor allem ihr Zusammenbau erheblich erschwert wird. Außerdem verlangt das Einführen eines Steckrohres von oben oder unten eine große Raumfreiheit sowie präzise und paßgenaue Stoßelemente. Für Fahrzeugaufbauten ist daher eine solche Wandkonstruktion nicht brauchbar. Ebenfalls nicht brauchbar für Fahrzeugaufbauten ist eine bekannte Wandkonstruktion (FR-A-1 604 522) mit einer Nut-Feder-Verbindung der Vollkörperelemente, weil auch hier eine Sicherung gegen Querzug fehlt.

Der Erfindung liegt die Aufgabe zugrunde, für eine Randverbindung von Wandkonstruktionen Strangpreßprofile zu schaffen, die sowohl eine Sicherung gegen Querzug als auch gegen eine Längsverschiebung gewährleisten.

Diese Aufgabe wird an einer Randverbindung gemäß dem Oberbegriff des Patentanspruches 1 erfindungsgemäß durch die kennzeichnenden Merkmale dieses Patentanspruches gelöst.

Durch die erfindungsgemäße Ausbildung von aneinanderstoßenden Strangpreßprofilen wird in einfacher Weise eine Randverbindung für Wandkonstruktionen erreicht, die sowohl gegen Querverzug als auch gegen Längsverschiebung ausreichend gesichert ist. Dabei werden besonders einfach herzustellende Strangpreßprofile verwendet, deren Zusammenbau auch keine besonderen Kenntnisse und Fertigkeiten erfordert.

Weitere Merkmale der Erfindung sind in Unteransprüchen beansprucht.

Die Erfindung wird nachfolgend anhand von Ausführungsbeispielen, die auch in der Zeichnung schematisiert dargestellt sind, näher beschrieben. Es zeigt

Fig. 1 die zu verbindenden Seiten zweier aneinanderstoßender Strangpreßprofile im Schrägriß,

Fig. 2 eine Ansicht der verbundenen Profile zu Fig. 1, geschnitten nach der Linie II-II der Fig. 3,

Fig. 3 einen Querschnitt hierzu,

Fig. 4 eine Ansicht einer zweiten Profilverbindung, geschnitten nach der Linie IV-IV der Fig. 5,

Fig. 5 einen Querschnitt zu Fig. 4,

Fig. 6 eine Ansicht einer dritten Profilverbindung, geschnitten nach der Linie VI-VI der Fig. 7,

Fig. 7 einen Querschnitt zu Fig. 6,

Fig. 8 eine Ansicht einer vierten Profilverbindung, geschnitten nach der Linie VIII-VIII der Fig. 9,

Fig. 9 einen Querschnitt zu Fig. 8,

Fig. 10 eine Ansicht einer fünften Profilverbindung, geschnitten nach der Linie X-X der Fig. 11, und

Fig. 11 einen Querschnitt zu Fig. 10.

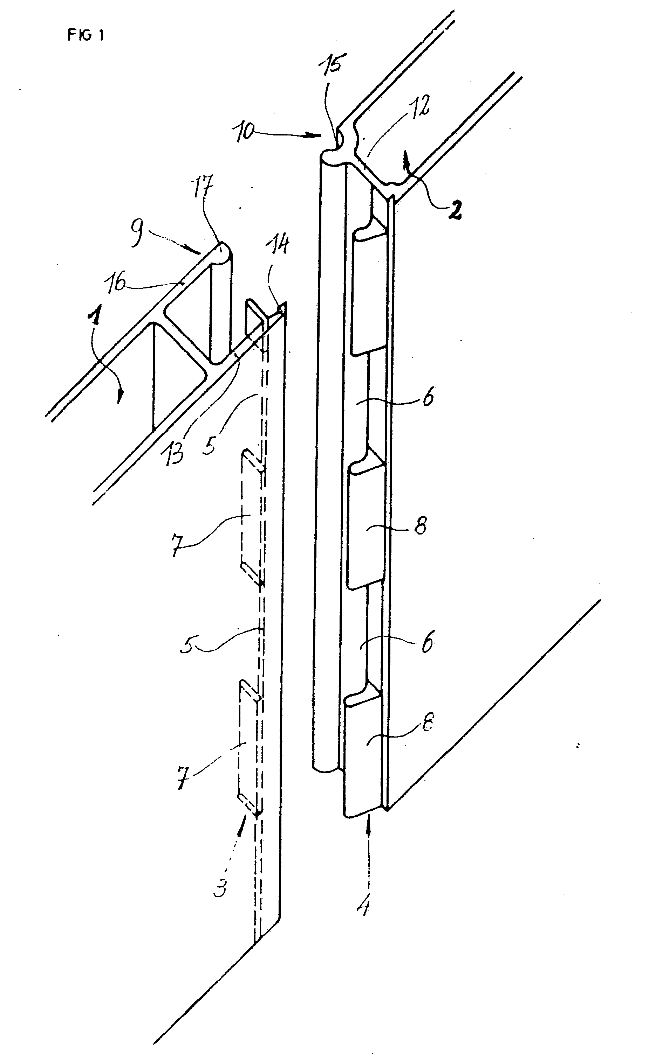

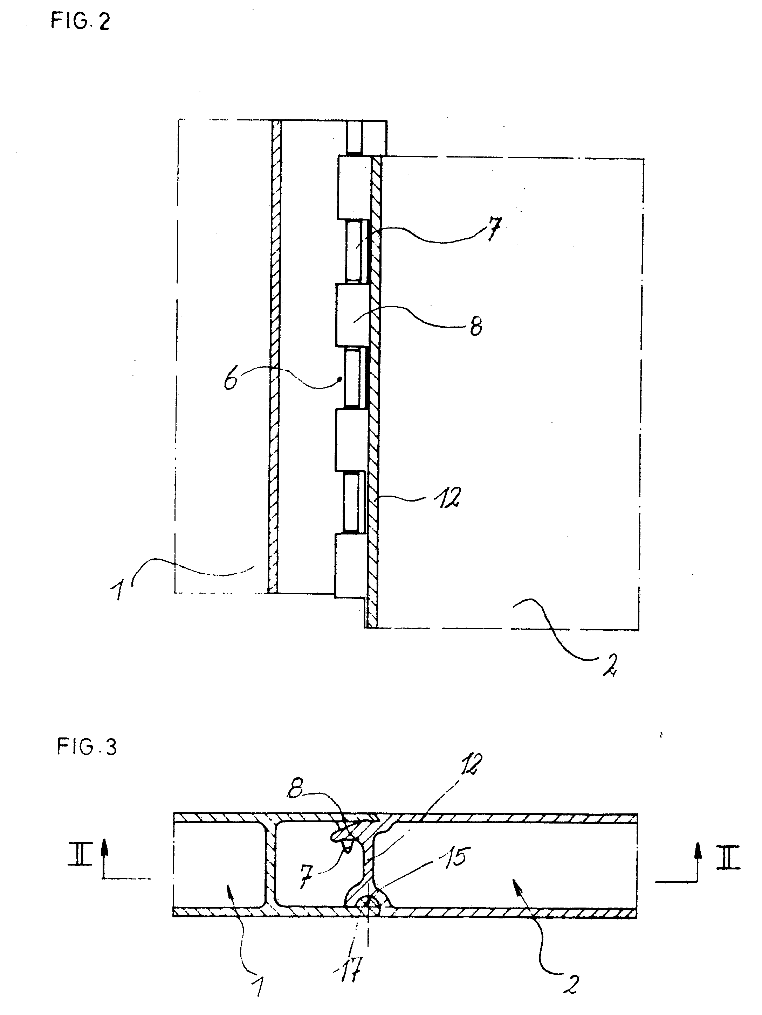

Wie die Fig. 1 bis 3 zeigen, werden zwei aus Aluminium-Strangpreßprofilen 1, 2 hergestellte Bordwände an ihren einander zugewandten Stoßrändern mit Längsrippen ausgestattet, wobei in deren Zahnrippen 3, 4 durch Fräsen, Stanzen od. dgl. Ausnehmungen 5, 6 ausgebildet sind, in die beim Zusammenfügen der beiden Strangpreßprofile 1 und 2 die entsprechenden stehengebliebenen Rippenabschnitte 7 und 8 ineinander eingreifen und dadurch einen Verspannungseffekt bewirken, der ein Längsverschieben der Profile gegeneinander formschlüssig verhindert. Da eine Vielzahl derartiger Rippenabschnitte 7 und 8 auf der ganzen Länge der Profile vorgesehen sind, können auch große Schubkräfte übertragen werden, so daß sich eine derartige Platte festigkeitsmäßig wie einstückig verhält, obwohl keine Nietungen, Schweißungen u. dgl. vorgenommen sind. Das Zusammenfügen gestaltet sich vielmehr ebenso einfach wie bei einer entsprechenden Platte ohne Ausnehmungen durch einfaches Einhängen und Verschwenken, wozu noch die Querverbindungsrippen 9, 10 dienen. Diese Querverbindungsrippe 10 ist dabei mit einer Gelenkspfanne 15 und die Rippe 9 mit einem Gelenkwulst 17 ausgestattet, die ineinandergreifen. Während die Zahnrippe 4 unmittelbar vom Quersteg 12 des Profiles 2 absteht, ist die Zahnrippe 3 des anderen Profiles 1 von einem Endschenkel 13 nach innen gerichtet und dieser Endschenkel bildet noch die über diese Zahnrippe 3 hinausstehende und die andere Zahnrippe 4 überdeckende Deckleiste 14. Die Querverbindungsrippe 9 ist mit ihrem Gelenkwulst 17 in Anpassung an den Endschenkel 13 an einem End-schenkel 16 ausgebildet.

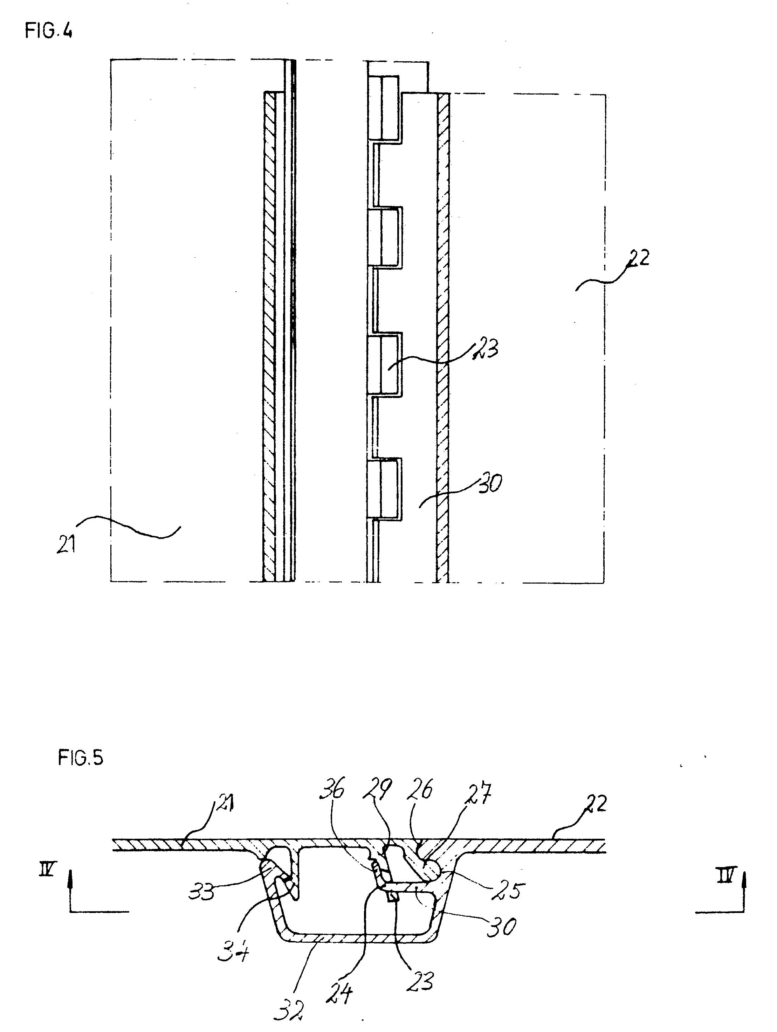

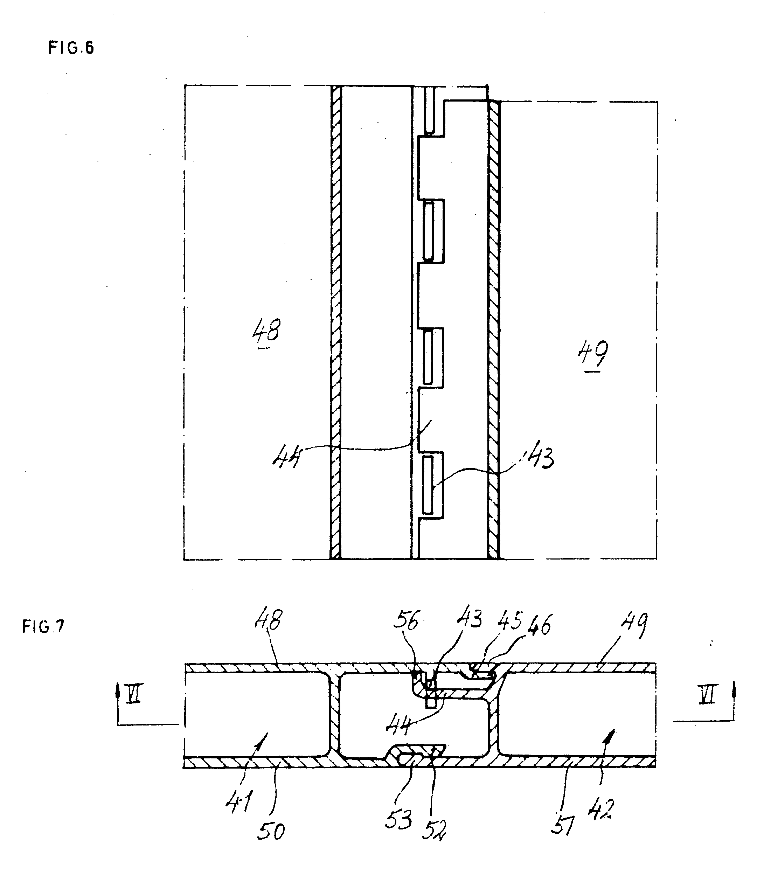

In den Fig. 4 und 5 wird an einer anderen Randverbindung die Anwendung der Erfindung gezeigt, wobei die Zahnrippe 23 verlängert ist, um mit der Zahnrippe 24 die Verzahnung zu bilden. Dabei wird eine Gelenkverbindung von einer an die Profilwand des einen Strangpreßprofiles 22 angeformten Gelenkpfanne 25 sowie einem an die Stoßkante 26 des anderen Strangpreßprofiles 21 angeformten Gelenkwulst 27 gebildet. Die Zahnrippen 23, 24 sind an sich kreu-zenden und die Gelenkverbindung umschließen-den Stegen 29, 30 vorgesehen, wobei ein Fortsatz 36 des Steges 30 den Steg 29 übergreift. Zur Verrastung der beiden Strangpreßprofile dient eine an der Gelenkpfanne 25 angesetzte Spange 32, die die Zahnrippen 23, 24 umgibt und die mit ihrem Hakenende 33 widerhakenartig in eine Raste 34 des anderen Strangpreßprofiles 21 eingreift (Fig. 4, 5).

In den Fig. 6 und 7 wird die Verzahnung in die die Einschnappverrastung bildenden Zahnrippen 43, 44 verlegt. Die Verbindung der beiden zweischaligen Strangpreßprofile 41, 42 erfolgt durch Einschwenken der an den Profilwänden 48, 49 ausgebildeten Wandfortsätze 45, 46, wobei die Zahnrippen 43, 44 ineinandergreifen und ein Fortsatz 56 der Zahnrippe 44 die Zahnrippe 43 übergreift. Die beiden anderen Profilwände 50, 51 rasten mittels der Einrastrippen 52, 53 ein (Fig. 6, 7).

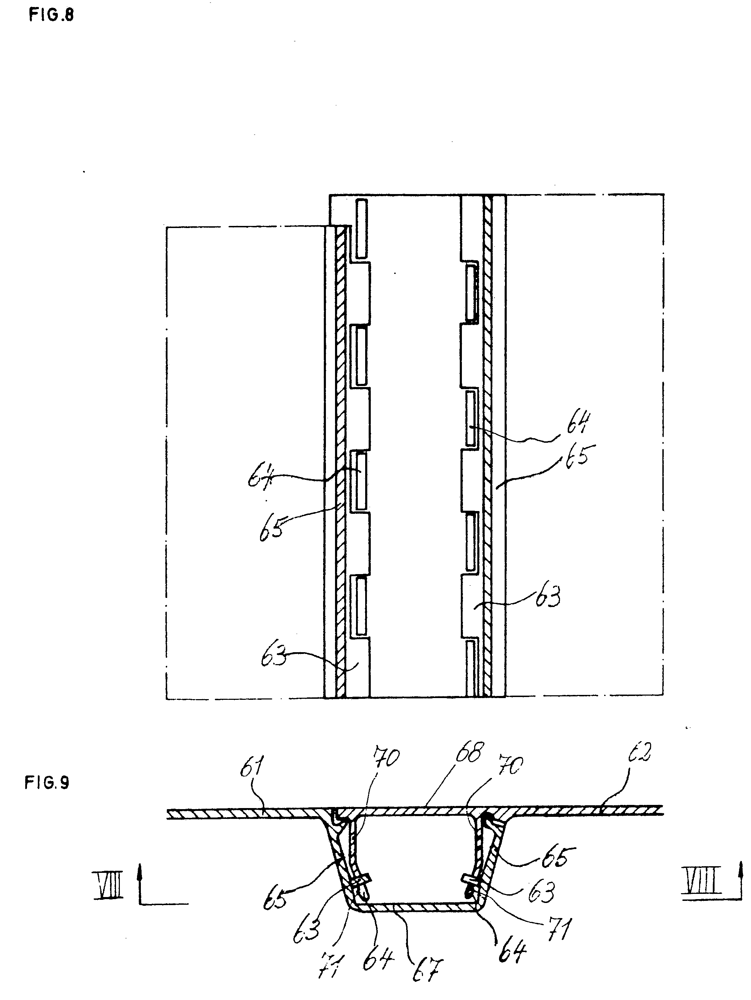

Bei der Ausführung gemäß den Fig. 8 und 9 wird im Gegensatz dazu keine Einschwenk-, sondern eine Einschiebeverrastung vorgesehen, bei der das Profil 61 mit dem Profil 62 durch einfa-ches überdeckendes Einschieben und Verra-stung mit Hilfe der Zahnrippen 63, 64 verbunden wird, so daß hier eine doppelte Verzahnung vorliegt. Dabei endet das eine Strangpreßprofil 61 mit einer trogförmigen, auf der Profilwandseite offenen Übergreifleiste 67, von deren beiden Leistenschenkeln 65 die Zahnrippen 63 nach innen abstehen. Das andere Strangpreßprofil 62 weist an seinem die offene Übergreifleiste 67 abdeckenden Wandabschnitt 68 in die Übergreifleiste 67 hineinragende Federschenkel 70 auf, die mit ihren an den Enden ausgebildeten Zahnrippen 64 in die Zahnrippen 63 der Übergreifleiste eingreifen. Die Rippenabschnitte der Federschenkel Zahnrippen 64 sind mit widerhakenartigen Köpfen 71 zum Einrasten in die entsprechenden Ausschnitte der Zahnrippen 63 versehen (Fig. 8, 9).

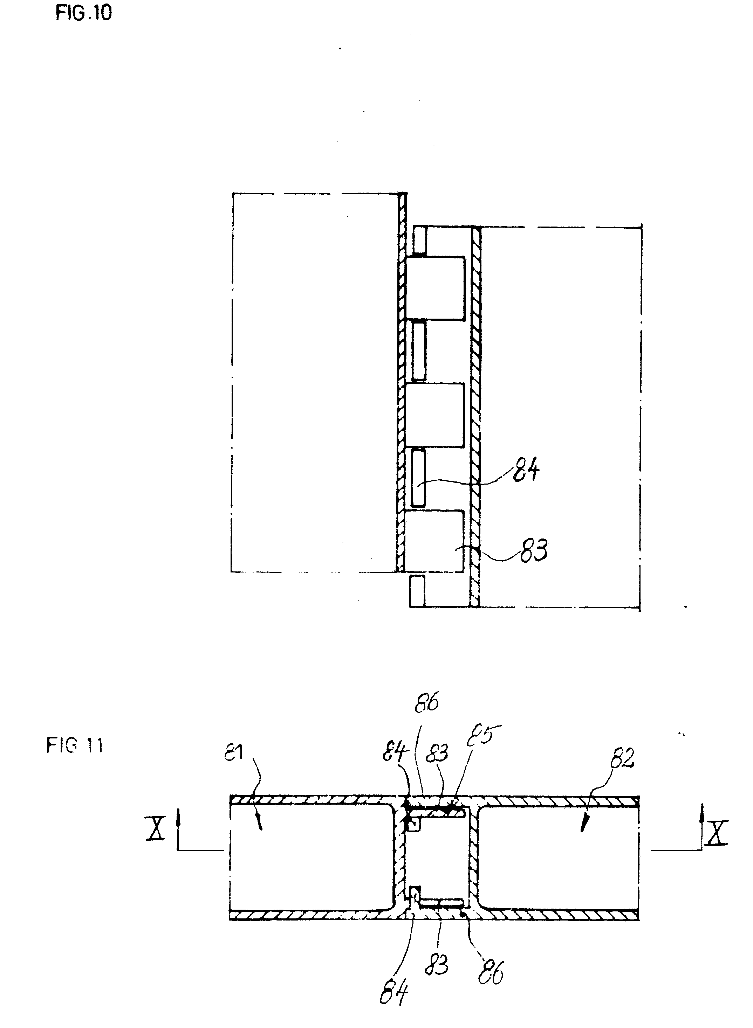

Die Ausführung nach den Fig. 10 und 11 stellt ebenfalls eine einfache Einschiebeverbindung der Strangpreßprofile 81, 82 quer zur Längsrichtung dar. Das eine Strangpreßprofil 82 weist dazu auf die Profilwände ausgerichtete Überschubschenkel 86 und das andere Strangpreßprofil 81 mit Paßsitz in diese Überschubschenkel einschiebbare Einschubschenkel 85 auf. Die Einschubschenkel 85 sind zu Zahnrippen 83 ausgebildet, in die die dazu querstehenden, an den Innenflächen der Überschubschenkel 86 vorhandenen Zahnrippen 84 eingreifen (Fig. 10, 11).

Die Erfindung ist nicht auf die dargestellten Ausführungsbeispiele beschränkt. So muß die Verzahnung nicht innerhalb einer Profilverbindung, also von außen unsichtbar angeordnet sein. Ist sie von außen sichtbar, dann kann sie auch leicht kontrolliert werden. Als Profile eignen sich neben Metallprofilen auch Kunststoffprofile. Dabei können die Zahnrippen rechtwinklige oder auch schräge Zahnflanken aufweisen.

**Patentansprüche**

1. Randverbindung für aneinanderstoßende Strangpreßprofile aus Metall oder Kunststoff zur Bildung einer Wandkonstruktion, wobei an jedem Stoßrand dieser Strangpreßprofile mit Abstand nebeneinander verlaufende Längsrippen ausgebildet sind, die mit den Längsrippen des benachbarten Strangpreßprofiles paarweise in einem gegen Querzug gesicherten Eingriff stehen, dadurch gekennzeichnet, daß ein Paar die-ser einander zugekehrten Längsrippen wechsel-seitige Ausnehmungen (5, 6) und Rippenabschnitte (7, 8) aufweist, die sich für ein zahnartiges Ineinandergreifen dieser Zahnrippen (3, 4) überdecken, und daß das andere Längsrippenpaar als Querverbindungsrippen (9, 10) für die Ausführung einer Bewegung, die ein Einschwenken oder Einstecken der Zahnrippen (3, 4) ermöglicht, profiliert ist.

2. Randverbindung für zweischalige Strangpreßprofile nach Anspruch 1, dadurch gekennzeichnet, daß die Zahnrippe (4) des einen Strangpreßprofiles (2) von seinem Quersteg (12) absteht, während die zugehörige Zahnrippe (3) des anderen Strangpreßprofiles (1) von einem Endschenkel (13) nach innen gerichtet ist und dieser Endschenkel noch die über diese Zahnrippe (3) hinausstehende und die andere Zahnrippe (4) überdeckende Deckleiste (14) bildet (Fig. 1—3).

3. Randverbindung nach Anspruch 2, dadurch gekennzeichnet, daß die Querverbindungsrippen (10, 9) von einer am Quersteg (12) ausgeformten Gelenkpfanne (15) und einem am ge-genüberliegenden Endschenkel (16) angeform-ten Gelenkwulst (17) gebildet sind (Fig. 1—3).

4. Randverbindung für einschalige Strangpreßprofile nach Anspruch 1, dadurch gekennzeichnet, daß die Querverbindungsrippen von einer an die Profilwand des einen Strangpreßprofiles (22) angeformten Gelenkpfanne (25) sowie einem an die Stoßkante (26) des anderen Strangpreßprofiles (21) angeformten Gelenkwulst (27) gebildet sind, die Zahnrippen (23, 24) an sich kreuzenden und die Gelenkverbindung umschließenden Stegen (29, 30) ausgebildet sind und zur Verrastung der beiden Strangpreßprofile eine an der Gelenkpfanne (25) angesetzte Spange (32), die die Zahnrippen umgibt, mit ihrem Hakenende (33) widerhakenartig in eine Raste (34) des anderen Strangpreßprofiles (21) eingreift (Fig. 4, 5).

5. Randverbindung nach Anspruch 4, für zweigschalige Strangpreßprofile, dadurch gekennzeichnet, daß zur Querverbindung ein Fortsatz (56) der Zahnrippe (44) die Zahnrippe (43) übergreift, zum Einschwenken der Profile (41, 42) sich übergreifende Wandfortsätze (45, 46) an den einen Profilwänden (48, 49) ausgebildet sowie zur Verrastung an den anderen Profilwänden (50, 51) Einrastrippen (52, 53) vorgesehen sind (Fig. 6, 7).

6. Randverbindung nach einem der Ansprüche 4 oder 5, dadurch gekennzeichnet, daß die Zahnrippe (24, 44) des mit der Gelenkpfanne (25) bzw. einem Einschwenkraum (45) versehenen Strangpreßprofiles (22, 42) mit die andere Zahnrippe (23, 43) übergreifenden Fortsätzen (36, 56) versehen ist.

7. Randverbindung für einschalige Strangpreßprofile nach Anspruch 1, dadurch gekennzeichnet, daß das eine Strangpreßprofil (61) mit einer trogförmigen, auf der Profilwandseite offenen Übergreifleiste (67) endet, von deren beiden Leistenschenkeln (65) Zahnrippen (63) nach innen abstehen, das andere Strangpreßprofil (62) an seinem die offenen Übergreifleiste (67) abdeckenden Wandabschnitt (68) in die Übergreifleiste hineinragende Federschenkel (70) aufweist, die mit ihren Zahnrippen (64) in die Zahnrippen (63) der Übergreifleiste eingreifen, und daß an den Rippenabschnitten der Federschenkel-Zahnrippen (64) widerhakenartige Köpfe (71) zum Einrasten in die anderen Zahnrippen (63) vorgesehen sind (Fig. 8, 9).

8. Randverbindung für zweischalige Strangpreßprofile nach Anspruch 1, wobei das eine Strangpreßprofil (82) auf die Profilwände ausgerichtete Überschubschenkel (86) und das andere Strangpreßprofil (81) mit Paßsitz in diese Überschubschenkel einschiebbare Einschubschenkel (85) aufweisen, dadurch gekennzeichnet, daß die Einschubschenkel (85) zu Zahnrippen (83) ausgebildet und an den Innenflächen der Überschubschenkel in diese Zahnrippen (83) eingreifende Zahnrippen (84) vorgesehen sind, (Fig. 10, 11).

**Claims**

1. Marginal connection for abutting metallic or plastic extruded sections for forming a wall construction, each abutting edge of the extruded sections being provided with spaced longitudinal ribs which are arranged side by side and interlocked in pairs with the longitudinal ribs of the neighbouring extruded section and secured against transversal traction characterized in that one pair of these opposed longitudinal ribs has alternate recesses (5, 6) and ribbed parts (7, 8) which overlap one another in order to have the toothed ribs (3, 4) interlock like teeth, an that the other pair of longitudinal ribs is formed as cross-connecting ribs (9, 10) for performing a movement which makes possible the pivoting or the insertion of the toothed ribs (3, 4).

2. Marginal connection for double-sheet extruded sections according to claim 1, characterized in that the toothed rib (4) of the extruded section (2) projects over its cross web (12) while the respective toothed rib (3) of the other extruded section (1) is directed inward from an end leg (13) and this end leg also forms the cover strip (14) projecting over the toothed rib (3) and over-lapping the other toothed rib (4) (fig. 1—3).

3. Marginal connection according to claim 2, characterized in that the cross-connecting ribs (10, 9) are formed by a joint pan (15) provided at the cross web (12) and a joint reinforcement (17) provided at the opposed end leg (16) (fig. 1—3).

4. Marginal connection for single-sheet extruded sections according to claim 1, characterized in that the cross-connecting ribs are formed by a joint pan (25) provided at the sectional wall of one extruded section (22) and by a joint reinforcement (27) provided at the abutting edge (26) of the other extruded section (21), that the toothed ribs (23, 24) are formed at crossing webs (29, 30) enclosing the link joint and that for interlocking the two extruded sections a clip (32) provided at the joint pan (25) and enclosing the toothed ribs interlocks with its hooked end (33) like a barb with the notch (34) of the other extruded section (21) (fig. 4, 5).

5. Marginal connection according to claim 4 for double-sheet extruded sections, characterized in that for the transversal connection an extension (56) of the toothed rib (44) overlaps the toothed rib (43), that for pivoting the sections (41, 42) wall extensions (45, 46) overlapping one another are provided at the sectional walls (48, 49) and that for interlocking engaging ribs (52, 53) are provided at the other sectional walls (50, 51) (fig. 6, 7).

6. Marginal connection according to one of the claims 4 or 5, characterized in that the toothed rib (24, 44) of the extruded section (22, 42) provided with the joint pan (25) or a space (45) for pivoting is provided with extensions (36, 56) overlapping the other toothed rib (23, 43).

7. Marginal connection for single-sheet extruded sections according to claim 1, characterized in that one extruded section (61) ends with a trough-shaped overlapping strip (67) being open at the side of the sectional wall, toothed ribs (63) protruding inward from the two gibbed legs (65) of the overlapping strip, that the other extruded section (62) has at its wall portion (68) covering the open overlapping strip (67) spring legs (70) protruding into the overlapping strip, the toothed ribs (64) of the spring legs interlocking with the toothed ribs (63) of the overlapping strip, and that at the ribbed parts of the toothed ribs (64) of the spring legs barb-like heads (71) are provided for interlocking with the other toothed ribs (63) (fig. 8, 9).

8. Marginal connection for double-sheet extruded sections according to claim 1, one extruded section (82) having sleeve legs (86) aligned towards the sectional walls and the other extruded section (81) having interlocking legs (85) which can be pushed with snug fit into the sleeve legs, characterized in that the interlocking legs (85) are formed as toothed ribs (83) and that at the inner surface of the sleeve legs toothed ribs (84) are provided interlocking with the toothed ribs (83) (fig. 10, 11).

**Revendications**

1. Jonction marginale pour profilés extrudés en métal ou en matière plastique à aboutement mutuel pour former une structure de paroi, chacun des bords de rencontre de ces profilés extrudés étant doté de nervures longitudinales juxtaposées à distance, qui sont en prise par paires avec les nervures longitudinales du profilé extrudé voisin, avec résistance à la traction transversale, jonction caractérisée par le fait qu'une paire de ces nervures longitudinales tounées les unes vers les autres présente alternativement des évidements (5, 6) et des tronçons de nervures (7, 8) venant en recouvrement pour permettre aux moulures dentées (3, 4) de pénétrer les unes dans les autres à la manière de dents; et par le fait que l'autre paire de nervures longitudinales est profilée en forme de nervures (9, 10) de jonction transverale en vue de l'exécution d'un mouvement qui autorise un pivotement rentrant ou un emboîtement des moulures dentées (3, 4).

2. Jonction marginale pour profilés extrudés à double enveloppe selon la revendication 1, caractérisée par le fait que la moulure dentée (4) de l'un (2) des profilés extrudés fait saillie au-delà de son âme transversale (12), tandis que la moulure dentée correspondante (3) de l'autre profilé extrudé (1) est orientée vers l'intérieur à partir d'une branche extrême (13), et cette branche extrême forme encore la baguette de recouvrement (14) faisant saillie au-delà a cette moulure dentée (3) et coiffant l'autre moulure dentée (4) (fig. 1 à 3).

3. Jonction marginale selon la revendication 2, caractérisée par le fait que les nervures (10, 9) de jonction transversale sont respectivement formées par une cuvette d'articulation (15) ménagée sur l'âme transversale (12), et par un jonc d'articulation (17) élaboré solidairement sur la branche extrême opposée (16) (fig. 1 à 3).

4. Jonction marginale pour profilés extrudés à single enveloppe selon la revendication 1, caractérisée par le fait que les nervures de jonction transversale sont formées par une cuvette d'articulation (25) ménagée solidairement sur la paroi de l'un (22) des profilés extrudées, ainsi que par un jonc d'articulation (27) façonné solidairement sur le bord de rencontre (26) de l'autre profilé extrudé (21); par le fait que les moulures dentées (23, 24) sont réalisées sur des membrures (29, 30) qui se croisent et entourent la liaison articulée; et par le fait que, en vue de l'encliquetage des deux profilés extrudés, une agrafe (32), constituant l'appendice de la cuvette d'articulation (25) et entourant les moulures dentées, Pénètre par son extrémité crochue (33), à la manière d'un ardillon, dans un bec (34) de l'autre profilé extrudé (21) (fig. 4, 5).

5. Jonction marginale selon la revendication 4 pour profilés extrudés à double enveloppe, caractérisée par le fait que, en vue de la jonction transversale, un prolongement (56) de la moulure dentée (44) coiffe la moulure dentée (43); par le fait que, en vue du pivotement rentrant des profilés (41, 42), des appendices (45, 46) de paroi, en recouvrement mutuel, sont ménagés sur des parois respectives (48, 49) des profilés; et par le fait que des ergots encliquetables (52, 53) sont prévus sur les autres parois (50, 51) des profilés en vue de l'encliquetage (fig. 6, 7).

6. Jonction marginale selon l'une des revendications 4 ou 5, caractérisée par le fait que la moulure dentée (24, 44) du profil extrudé (22, 42) muni respectivement de la cuvette d'articulation (25) ou d'une chambre (45) permettant le pivotement rentrant, est pourvue de prolongements (36, 56) coiffant l'autre moulure dentée (23, 43).

7. Jonction marginale pour profilés extrudés à single enveloppe selon la revendication 1, caractérisé par le fait que l'un (61) des profilés extrudés s'achève par une baguette de surplomb (67) en forme d'auge, ouverte du côté de la paroi du profilé et à partir des deux ailes (65) de laquelle des moulures dentées (63) sont en saillie vers l'intérieur; par le fait que l'autre profilé extrudé (62) comporte, sur son tronçon de paroi (68) recouvrant la baguette de surplomb ouverte (67), des branches élastiques (70) qui s'engagent dans cette baguette de surplomb et qui pénètrent par leurs moulures dentées (64) dans les moulures dentées (63) de ladite baguette de surplomb; et par le fait que des têtes (71) en forme d'ardillons sont prévues, dans les régions formant nervures sur les moulures dentées (64) des branches élastiques, en vue de s'encliqueter dans les autres moulures dentées (63) (fig. 8, 9).

8. Jonction marginale pour profilés extrudés à double enveloppe selon la revendication 1, dans laquelle l'un (82) des profilés extrudés et l'autre (81) de ces profilés extrudés présentent respectivement des branches d'enveloppement (86) réalisées sur les parois du profilé et des branches captives (85) pouvant être enfilées avec ajustement serré dans lesdites branches d'enveloppement, jonction caractérisée par le fait que les branches captives (85) sont réalisées sous la forme de moulures dentées (83); et par le fait que, sur les faces internes des branches d'enveloppement, sont prévues des moulures dentées (84) qui pénètrent dans ces moulures dentées (83) (fig. 10, 11).

FIG 1

FIG. 2

FIG. 3

FIG.4

21

22

23

30

FIG.5

21   36  29  26   27   22

IV          IV

33
34          25
            30
32   24   23

FIG.6

FIG.7

FIG.8

FIG.9

FIG.10

FIG 11